# FASCICULE DE BREVET EUROPEEN

(11) **EP 3 500 414 B1**
(45) Date de publication et mention de la délivrance du brevet: **01.07.2020**
(21) Numéro de dépôt: 17771795.6
(22) Date de dépôt: 07.08.2017
(51) Int. Cl.: B29B 11/16, B29L 23/00

(54) **INSTALLATION ET PROCEDE DE MISE EN FORME D'UNE PREFORME FIBREUSE DE REVOLUTION PRESENTANT EN SECTION RADIALE UN PROFIL EVOLUTIF**
ANLAGE UND VERFAHREN ZUR HERSTELLUNG EINER AXIALSYMMETRISCHEN FASERIGEN VORFORM MIT EINEM SICH ENTWICKELNDEN PROFIL IM RADIALEN QUERSCHNITT
INSTALLATION AND METHOD FOR FORMING AN AXISYMMETRIC FIBROUS PREFORM HAVING, IN RADIAL CROSS-SECTION, AN EVOLVING PROFILE

(30) Priorité: 16.08.2016 FR 1657767
(43) Date de publication de la demande: 26.06.2019
(73) Titulaire: Safran Aircraft Engines, 75015 Paris (FR)
(72) Inventeur: FABRE, Hubert, Jean, Marie, 77550 Moissy-Cramayel Cedex (FR); HELLOT, Jérémy, 77550 Moissy-Cramayel Cedex (FR)
(74) Mandataire: Cabinet Beau de Loménie
(86) Numéro de dépôt international: PCT/FR2017/052205
(87) Numéro de publication internationale: WO 2018/033672

(56) Documents cités:
- WO-A1-2014/174193
- DE-A1-102013 210 034

## Description

### Arrière-plan de l'invention

La présente invention concerne la mise en forme de préformes fibreuses par enroulement d'une texture fibreuse obtenue par tissage tridimensionnel (3D) ou multicouche. De telles préformes fibreuses constituent des structures fibreuses de renfort de pièces en matériau composite.

L'invention concerne plus particulièrement les préformes fibreuses destinées à former des renforts de pièces en matériau composite de révolution présentant en section radiale un profil évolutif (variation de forme et/ou d'épaisseur) tel que par exemple un carter de soufflante de moteur aéronautique. La préforme fibreuse d'une telle pièce est réalisée par tissage d'une texture fibreuse et enroulement sous tension de cette texture sur un moule de révolution comportant une surface d'enroulement ayant en section radiale un profil en relief correspondant au profil de la pièce à fabriquer.

Afin de réaliser une texture fibreuse adaptée à la forme évolutive du moule d'injection, on utilise un tissage en forme, encore appelé « contour weaving » ou « outline weaving », qui consiste à appeler une longueur différente de fils de chaîne en fonction de leur position sur la largeur de la texture fibreuse tissée sous forme de bande de manière à obtenir des rapports entre les longueurs de fils de chaîne (direction tangentielle) similaires aux rapports entre les rayons définissant le profil évolutif de la pièce finale à fabriquer.

La texture fibreuse ainsi tissée est stockée sur un mandrin de stockage pour être ultérieurement enroulée sous tension sur un moule d'injection de révolution comportant une surface d'enroulement ayant en section radiale un profil en relief correspondant au profil de la pièce à fabriquer. La mise sous tension de la texture lors de son enroulement sur le moule est réalisée par le mandrin de stockage encore appelé mandrin « take-up », un ou plusieurs rouleaux suiveurs étant placés entre le mandrin de stockage et le moule d'injection. Le ou les rouleaux suiveurs présentent sur leur largeur axiale un rayon variable définissant une surface externe à profil en relief qui permet de conserver les rapports de longueurs de fils définis lors du tissage entre le mandrin de stockage et le moule d'injection. La conservation des rapports de longueurs de fils permet ainsi de maintenir une tension homogène dans la texture fibreuse.

Lors de la mise en forme de la préforme fibreuse sur le moule, la texture fibreuse est enroulée sur elle-même plusieurs fois. A chaque tour d'enroulement, le rapport entre les différents rayons définissant le profil en relief change en fonction des couches de texture fibreuse déjà enroulées. Ces changements de profil sont d'autant plus grands que les ratios de forme et/ou d'épaisseur dans la pièce finale sont importants.

Lors de son enroulement sur le moule d'injection, la texture fibreuse peut se décadrer en raison des différences entre le profil tissé et le profil réel sur lequel elle est enroulée, ce qui entraîne des pertes de tension à certaines positions axiales dans la texture. Ces déséquilibres de tension dans la largeur de la pièce peuvent entraîner des défauts comme des vagues, des flambements de fibres, des pincements de fibres, des zones de surépaisseurs non désirées et des taux volumiques de fibres hors spécification. Ces déséquilibres de tension peuvent également compliquer la mise en forme par enroulement de la texture fibreuse en entraînant notamment la formation de plis ou de désalignements, ce qui augmente la pénibilité et le temps de la mise en forme de la texture fibreuse.

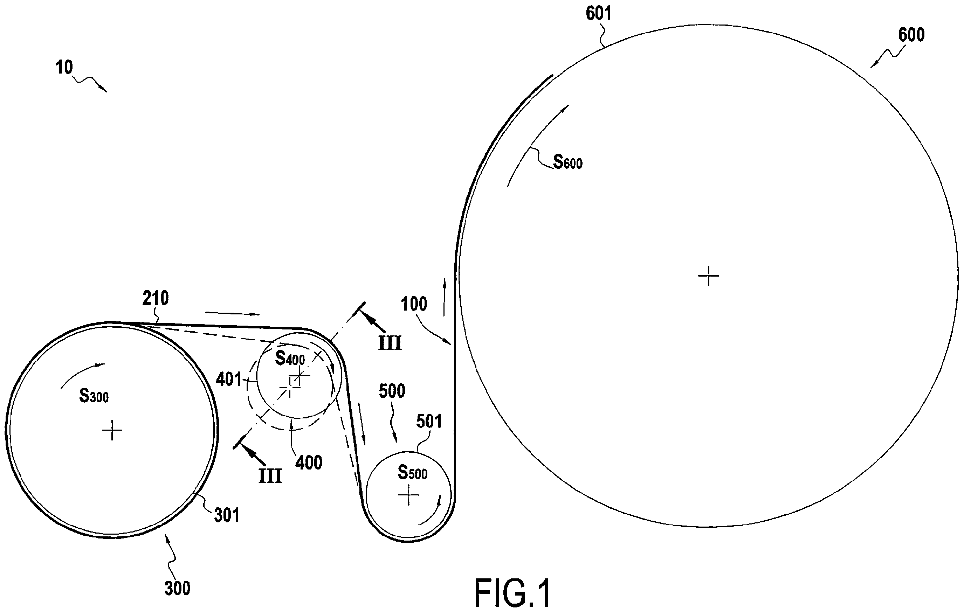

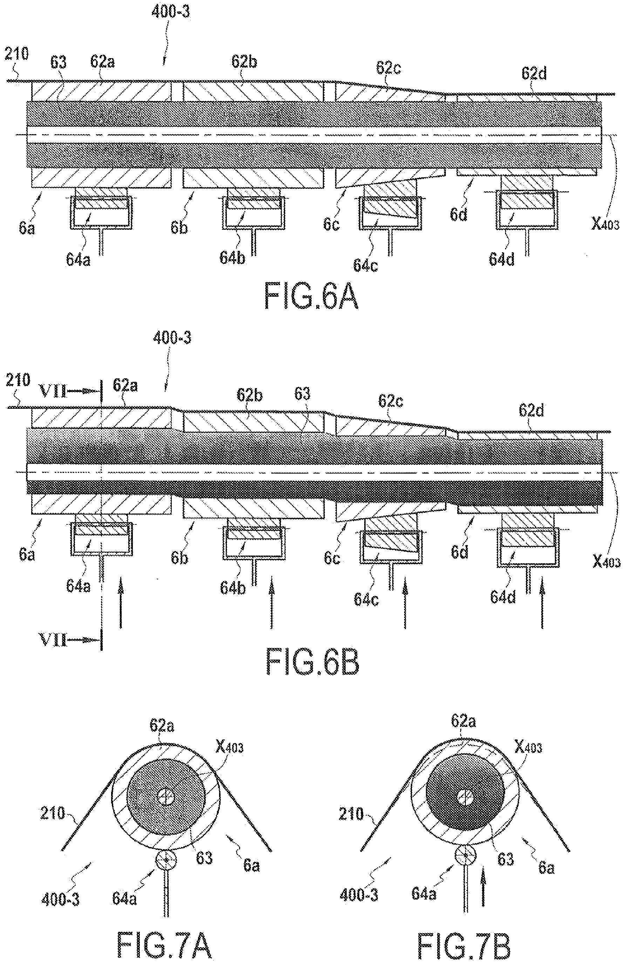

Le document WO 2014/174193 divulgue une installation pour la mise en forme d'une préforme fibreuse de révolution présentant en section radiale un profil évolutif (figure 6A) à partir d'une texture fibreuse obtenue par tissage tridimensionnel ou multicouche, comprenant un mandrin de stockage destiné à stocker la texture fibreuse en forme de bande enroulée, un ou plusieurs rouleaux suiveurs et un moule de révolution sur lequel la texture fibreuse est destinée à être mise en forme par enroulement sous tension, le ou les rouleaux suiveurs étant placés entre le mandrin de stockage et le moule de révolution, le mandrin de stockage, chaque rouleau suiveur et le moule présentant sur leur largeur axiale un rayon variable de manière à définir une surface externe ayant un profil en relief (figure 1B).

### Objet et résumé de l'invention

L'invention vise à apporter une solution aux inconvénients précités.

A cet effet, selon l'invention, il est proposé une installation pour la mise en forme d'une préforme fibreuse de révolution présentant en section radiale un profil évolutif, comprenant un mandrin de stockage destiné à stocker une texture fibreuse en forme de bande enroulée, un ou plusieurs rouleaux suiveurs et un moule de révolution sur lequel la texture fibreuse est destinée à être mise en forme par enroulement, le ou les rouleaux suiveurs étant placés entre le mandrin de stockage et le moule de révolution, le mandrin de stockage, chaque rouleau suiveur et le moule présentant sur leur largeur axiale un rayon variable de manière à définir une surface externe ayant un profil en relief, au moins un rouleau suiveur comprenant une pluralité de segments de rouleau s'étendant chacun sur une partie de la largeur axiale du rouleau suiveur, chaque segment de rouleau comprenant :
- un tablier définissant une partie de la surface externe du rouleau suiveur ; et
- un système d'actionnement apte à déplacer dans une direction radiale par rapport à l'axe du rouleau suiveur le tablier dudit segment de rouleau de manière à modifier localement le profil de la surface externe du rouleau suiveur.

Par l'utilisation de segments de rouleau permettant de modifier localement le profil en relief de la surface externe d'un ou plusieurs rouleaux suiveurs lors de l'enroulement sous tension de la texture fibreuse sur le moule, l'installation de l'invention permet de mettre en forme de préformes fibreuses à profil évolutif en section radiale dans lesquelles les pertes ou inhomogénéités de tension sont significativement réduites. Par ailleurs, les segments de rouleau de l'invention peuvent également être utilisés pour augmenter localement la tension dans la texture fibreuse, par exemple pour réduire le foisonnement de la préforme dans une zone plus épaisse (pour éviter pincements et flambements).

Ces effets peuvent résulter de l'enroulement de la texture sur le moule pour sa mise en forme ou apparaître pendant la fermeture du moule lorsque la tension exercée sur la texture a été mal appliquée, et sont alors visibles sur la pièce injectée. Avantageusement, lors de son enroulement sur le moule, la préforme fibreuse présente peu de défauts (vagues sur les premiers tours enroulés, tension mal appliquée engendrant des flambements et/ou pincements de fibres lors de la fermeture du moule, zones de surépaisseurs non désirées, taux volumiques de fibres hors spécification, plis, désalignements, etc.) par rapport à une préforme fibreuse réalisée selon l'art antérieur où les déséquilibres de tension sont plus importants. On réduit ainsi les arrêts inopinés de la machine d'enroulement habituellement nécessaires pour reprendre les défauts tels que des plis ou effondrement de portions de la texture qui requièrent en outre un retour en arrière de la machine ainsi qu'une intervention d'un ou plusieurs techniciens. Avantageusement, une telle installation permet en outre de fabriquer des préformes fibreuses distinctes présentant des profils proches avec un même rouleau suiveur, c'est-à-dire sans nécessiter le remplacement de ce rouleau suiveur contrairement à l'état de l'art.

Selon une première caractéristique particulière de l'installation de l'invention, une membrane souple recouvre chaque tablier de segment de rouleau dudit au moins un rouleau suiveur.

Selon une deuxième caractéristique particulière de l'installation de l'invention, chaque segment de rouleau d'au moins un rouleau suiveur est associé à un capteur apte à mesurer la tension de la texture fibreuse, chaque capteur étant connecté à un système d'asservissement configuré pour commander, en réponse aux mesures de tension des capteurs, le système d'actionnement de tout ou partie des segments de rouleau.

Selon une troisième caractéristique particulière de l'installation de l'invention, chaque segment de rouleau comprend un axe de rotation distinct, le tablier du segment de rouleau étant solidaire de l'axe de rotation, le système d'actionnement étant configuré pour déplacer radialement l'axe de rotation dudit segment de rouleau.

Selon une quatrième caractéristique particulière de l'installation de l'invention, ledit au moins un rouleau suiveur comprend un axe de rotation commun aux segments de rouleau, chaque tablier de segment de rouleau étant relié à l'axe de rotation par au moins un élément élastiquement déformable, le système d'actionnement comprenant une pluralité d'éléments contrarotatifs aptes à appliquer un effort de déplacement radial sur chaque tablier de segment de rouleau.

Selon une cinquième caractéristique particulière de l'installation de l'invention, ledit au moins un élément élastiquement déformable comprend des ressorts ou une mousse comprimable.

Selon une sixième caractéristique particulière de l'installation de l'invention, ledit au moins un rouleau suiveur comprend un arbre de support fixe avec une pluralité de paliers à roulement en regard de chaque tablier de segment de rouleau, chaque tablier étant relié aux paliers à roulement par des ressorts, le système d'actionnement comprenant une pluralité d'éléments contrarotatifs aptes à appliquer un effort de déplacement radial sur chaque tablier de segment de rouleau.

L'invention a également pour objet un procédé de mise en forme d'une préforme fibreuse de révolution présentant en section radiale un profil évolutif à partir d'une texture fibreuse obtenue par tissage tridimensionnel ou multicouche, la texture fibreuse étant mise en forme par enroulement sous tension sur un moule de révolution afin d'obtenir la préforme fibreuse, la texture fibreuse étant déroulée à partir d'un mandrin de stockage, la texture fibreuse circulant sur un ou plusieurs rouleaux suiveurs placés entre le mandrin de stockage et le moule de révolution, le mandrin de stockage, chaque rouleau suiveur et le moule présentant sur leur largeur axiale un rayon variable de manière à définir une surface externe ayant un profil en relief, au moins un rouleau suiveur comprenant une pluralité de segments de rouleau s'étendant chacun sur une partie de la largeur axiale du rouleau suiveur, chaque segment de rouleau comprenant un tablier définissant une partie de la surface externe dudit au moins un rouleau suiveur, chaque tablier étant mobile dans une direction radiale par rapport à l'axe dudit au moins un rouleau suiveur, le procédé comprenant, en outre, au cours de l'enroulement de la texture fibreuse sur le moule de révolution, une étape de déplacement d'au moins un tablier d'un segment de rouleau parmi une pluralité de segments de rouleau dans une direction radiale par rapport à l'axe dudit au moins un rouleau suiveur.

Selon une caractéristique particulière du procédé de l'invention, le procédé comprend
- une étape de mesure d'une tension s'exerçant sur une texture fibreuse déroulée à partir du mandrin de stockage et circulant sur un rouleau suiveur ; et
- en réponse à la mesure de tension, une étape de commande de déplacement radial du tablier d'au moins un segment de rouleau.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une installation pour la mise en forme d'une texture fibreuse à forme évolutive conformément à un mode de réalisation de l'invention ;
- la figure 2 est une vue schématique en perspective montrant l'enroulement d'une texture fibreuse sur un moule d'injection de l'installation de la figure 1 ;
- les figures 3A et 3B sont des vues schématiques en coupe axiale d'un rouleau suiveur selon le plan III de la figure 1 selon un mode de réalisation ;
- les figures 4A et 4B sont des vues schématiques en coupe axiale d'un rouleau suiveur selon le plan III de la figure 1 selon un autre mode de réalisation ;
- les figures 5A et 5B sont des vues schématiques en coupe axiale du rouleau suiveur des figures 4A et 4B selon le plan V ;
- les figures 6A et 6B sont des vues schématiques en coupe axiale d'un rouleau suiveur selon le plan III de la figure 1 selon un autre mode de réalisation ;
- les figures 7A et 7B sont des vues schématiques en coupe axiale du rouleau suiveur des figures 6A et 6B selon le plan VII ;
- les figures 8A et 8B sont des vues schématiques en coupe axiale d'un rouleau suiveur selon le plan III de la figure 1 selon un autre mode de réalisation ;
- les figures 9A et 9B sont des vues schématiques en coupe axiale du rouleau suiveur des figures 8A et 8B selon le plan IX.

### Description détaillée de modes de réalisation

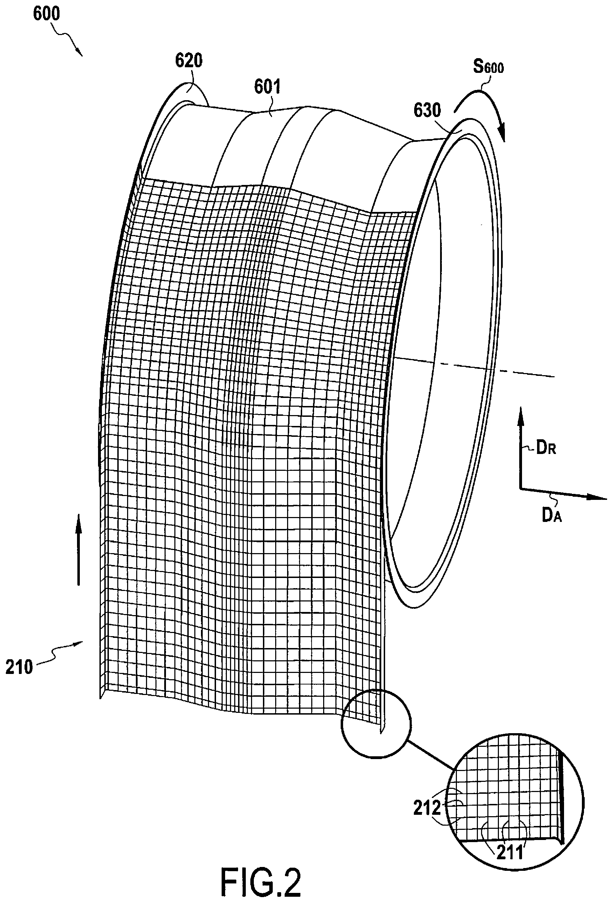

L'invention s'applique d'une manière générale à la réalisation de préformes fibreuses de révolution présentant en coupe radiale un profil évolutif et qui sont aptes à constituer des renforts fibreux, ces préformes étant destinées à être utilisées pour la fabrication de pièces en matériau composite de forme de révolution présentant également un profil évolutif et/ou une épaisseur variable notamment en section radiale. La section radiale correspond à un plan défini par la direction axiale et la direction radiale du moule sur lequel la préforme est mise en forme. La direction axiale DA et la direction radiale DR sont indiquées sur la figure 2. Les pièces sont obtenues par enroulement d'une texture fibreuse sur un moule, injection d'une composition fluide, telle qu'une résine, dans la préforme fibreuse ainsi constituée, puis traitement thermique de ladite composition afin d'obtenir la matrice.

La figure 1 représente une installation 10 pour la mise en forme d'une préforme fibreuse à forme évolutive conformément à un mode de réalisation de l'invention. L'installation 10 comprend un mandrin de stockage 300, deux rouleaux suiveurs 400 et 500 placés en aval du mandrin 300 selon le sens de défilement de la texture fibreuse et un moule 600 disposé en aval du rouleau suiveur 500. Une texture fibreuse 210 présente sur le mandrin de stockage 300 est déroulée à partir de celui-ci pour être mise en forme par enroulement sur le moule 600, l'enroulement se faisant sous une tension contrôlée au niveau du mandrin de stockage.

La structure fibreuse 210 est obtenue par tissage tridimensionnel ou par tissage multicouche réalisé de façon connue au moyen d'un métier à tisser de type jacquard sur lequel on a disposé un faisceau de fils de chaînes ou torons en une pluralité de couches. Les fils de chaînes sont liés par des fils de trame dans la structure obtenue.

Par "tissage tridimensionnel" ou "tissage 3D", on entend ici un mode de tissage par lequel certains au moins des fils de trame lient des fils de chaîne sur plusieurs couches de chaîne ou inversement. Le tissage 3D peut être de type interlock comme décrit dans le document WO 2006/136755.

Par "tissage multicouche", on désigne ici un tissage 3D avec plusieurs couches de chaîne dont l'armure de base de chaque couche est équivalente à une armure de tissu 2D classique, tel qu'une armure de type toile, satin ou sergé, mais avec certains points de l'armure qui lient les couches de chaîne entre elles ou inversement.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

La structure fibreuse peut être notamment tissée à partir de fils de fibres de carbone, de céramique telle que du carbure de silicium, de verre, ou encore d'aramide.

Afin de réaliser une texture fibreuse adaptée à la forme évolutive de la préforme fibreuse à former sur le moule d'injection, on utilise un tissage en forme, encore appelé « contour weaving », qui consiste à appeler une longueur différente de fils de chaîne en fonction de leur position sur la largeur de la texture fibreuse tissée sous forme de bande. A cet effet, on utilise un ou plusieurs rouleaux d'appel en sortie du métier à tisser qui présentent sur leur largeur axiale un rayon variable définissant une surface externe à profil en relief permettant d'appeler des longueurs de fils de chaîne différentes en fonction de leur position sur la largeur de la texture fibreuse, une plus grande longueur de fil de chaîne étant appelée par la ou les parties d'un rouleau d'appel ayant un rayon plus important que le reste du rouleau. Les appels différentiels réalisés par les rouleaux d'appel se répercutent jusque dans la cellule de tissage du métier à tisser en tirant la bonne longueur de fils de chaîne avant l'insertion de la colonne de fils de trame suivante. La texture ainsi tissée est enroulée sur un mandrin ou tambour de stockage, encore appelé mandrin « take-up », situé en aval des rouleaux d'appel. La texture fibreuse est ainsi stockée en vue de sa mise en forme ultérieure sur un moule.

Comme illustrée sur la figure 2, la préforme fibreuse est mise en forme par enroulement sur un moule d'injection 600 de la texture fibreuse 210. La texture fibreuse 210 est réalisée par tissage tridimensionnel ou multicouches entre une pluralité de fils de chaîne 211 et une pluralité de fils de trame 212. La texture fibreuse 210 forme une bande présentant en section transversale un profil évolutif, c'est-à-dire une variation de forme et/ou d'épaisseur en coupe transversale. Le moule présente en section radiale un profil correspondant à celui de la pièce à réaliser qui correspond dans l'exemple décrit ici à un carter de soufflante de moteur aéronautique.

A cet effet, le moule 600 présente une surface externe 601 dont le profil en relief correspond à la surface interne du carter à réaliser. Par son enroulement sur le moule 600, la texture fibreuse 210 épouse le profil de celui-ci. Le moule 600 comporte également deux flasques 620 et 630 pour former des parties de préforme fibreuse correspondant aux brides du carter à fabriquer. Le moule 600 est entraîné en rotation suivant le sens de rotation S₆₀₀, par exemple par un moteur électrique (non représenté sur la figure 2), tandis que la texture fibreuse 210 est mise sous tension entre le mandrin de stockage 300 et le moule 600.

Les premier et deuxième rouleaux suiveurs 400 et 500 placés en aval du mandrin de stockage 300 sont entraînés par la texture fibreuse 210 suivant respectivement des sens de rotation S₄₀₀ et S₅₀₀ indiqués sur la figure 1. Ils présentent sur leur largeur axiale un rayon variable de manière à définir respectivement des surfaces externes 401 et 501 ayant un profil en relief correspondant au profil visé pour la préforme fibreuse à réaliser.

L'installation 10 comprend en outre un mandrin ou tambour de stockage 300, encore appelé mandrin « take-up », qui est entraîné principalement en rotation suivant le sens de rotation S₃₀₀ et qui présente également sur sa largeur axiale un rayon variable de manière à définir une surface externe 301 ayant un profil en relief correspondant au profil visé pour la préforme fibreuse afin de limiter la déformation de la texture fibreuse 210 lors de son stockage. Le mandrin de stockage 300 assurant la mise sous tension de la texture fibreuse lors de son enroulement, il se peut que la rotation de celui-ci soit momentanément stoppée ou inversée par rapport au sens de rotation S₃₀₀ afin de maintenir la tension sur la texture lors de son enroulement sur le moule d'injection.

Conformément à l'invention, au moins un rouleau suiveur 400, 500 comprend une pluralité de segments de rouleau s'étendant chacun sur une partie de sa largeur axiale. Chaque segment de rouleau comprend un tablier qui lui est propre, et qui définit ainsi une partie de la surface externe du rouleau suiveur 400, 500. Chaque segment de rouleau présente donc une largeur axiale inférieure à la largeur axiale du rouleau suiveur 400, 500.

En outre, chaque segment de rouleau comprend un système d'actionnement apte à déplacer dans une direction radiale par rapport à l'axe du rouleau suiveur 400, 500 son tablier, permettant ainsi de modifier localement le profil de la surface externe du rouleau suiveur 400, 500.

Chaque tablier peut donc être déplacé de manière indépendante, de sorte à contrôler localement la variation du rayon du rouleau suiveur 400, 500 le long de sa largeur axiale.

Le nombre de segments de rouleau pour un rouleau suiveur 400, 500 peut notamment être déterminé en fonction de la complexité géométrique de la pièce à réaliser. A titre d'exemple, il est possible de mettre en oeuvre un segment de rouleau par zone de tissage, correspondant généralement à une épaisseur spécifique. En effet, des zones de tissages comprenant des armures de tissages et/ou des types de torons spécifiques peuvent présenter des comportements différents, pouvant alors nécessiter l'application indépendante de tensions différentes sur la texture fibreuse 210.

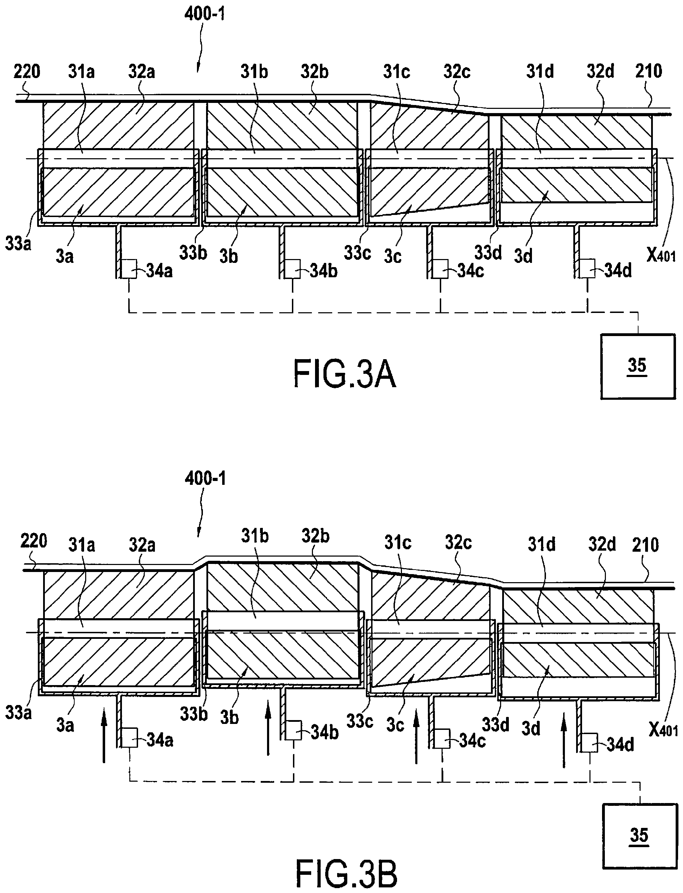

Les figures 3A et 3B illustrent un premier mode de réalisation d'un rouleau suiveur 400-1 qui est, à titre d'exemple, le rouleau suiveur 400 de la figure 1, vu dans le plan de coupe III.

Le rouleau suiveur 400-1 est formé de quatre segments de rouleau 3a, 3b, 3c, 3d, ce nombre étant ici choisi à titre illustratif. Chaque segment de rouleau comprend un axe de rotation 31a, 31b, 31c, 31d distinct, et le tablier 32a, 32b, 32c, 32d de chacun de ces segments de rouleau est solidaire de son axe de rotation. Chaque segment de rouleau 3a, 3b, 3c, 3d comprend, en outre, un système d'actionnement apte à déplacer radialement son axe de rotation, de manière à ainsi déplacer radialement le tablier 32a, 32b, 32c, 32d solidaire de l'axe de rotation. Le déplacement radial de chaque segment de rouleau 3a, 3b, 3c, 3d peut être effectué d'une manière indépendante du déplacement radial des autres segments de rouleau.

Dans l'exemple illustré, chaque système d'actionnement de chaque segment de rouleau 3a, 3b, 3c, 3d comprend notamment des bras 33a, 33b, 33c, 33d disposés respectivement de part et d'autres de chaque axe de rotation 31a, 31b, 31c, 31d et reliés à ces axes de rotation. Des moyens de déplacement des 33a, 33b, 33c, 33d, symbolisés par les flèches verticales sur la figure 3B, par exemple des vérins, permettent alors de contrôler le déplacement radial des bras 33a, 33b, 33c, 33d, et donc le déplacement radial de chaque tablier 32a, 32b, 32c, 32d de chaque segment de rouleau 3a, 3b, 3c, 3d.

Le contrôle du déplacement de chaque tablier 32a, 32b, 32c, 32d permet alors de contrôler localement, selon la largeur axiale du rouleau suiveur, la mise sous tension de la texture fibreuse 210 circulant sur le rouleau suiveur.

La figure 3A illustre, à titre d'exemple, une situation initiale pour laquelle la texture fibreuse 210 est déroulée du mandrin de stockage, circule sur des rouleaux suiveurs 400, 500, dont le rouleau suiveur 400-1, puis est enroulée sur le moule 600.

Dans cette situation initiale, on suppose qu'un premier enroulement n'entraine pas de décadrage de la texture fibreuse 210 sur le moule 600. La tension exercée sur la texture fibreuse 210 par le rouleau suiveur 400-1 est alors supposée comme adaptée. En conséquence, aucun déplacement des segments de rouleau 3a, 3b, 3c, 3d n'est effectué et leurs axes de rotation 31a, 31b, 31c, 31d sont alors alignés selon un même axe X₄₀₁.

La figure 3B illustre ensuite une situation consécutive à la situation initiale, nécessitant une adaptation locale de la tension exercée par le rouleau suiveur 400-1 sur la texture fibreuse 210, en vue de limiter, par exemple, tout risque de décadrage de la texture fibreuse 210 lors de son enroulement sur le moule 600. Le décadrage constitue ici un des indicateurs de qualité de la répartition de la tension de la texture fibreuse 210 influant sur la qualité de la pièce produite, notamment sur son taux de fibres. Cependant d'autres indicateurs peuvent être pris en compte pour adapter la tension sur la texture fibreuse 210, par exemple le foisonnement qui influe sur les vagues, pincements et flambements des fibres.

Comme il peut être vu sur cette figure, certains tabliers des segments de rouleaux sont alors déplacés radialement, et de manière indépendante, par rapport à l'axe X₄₀₁. La tension exercée sur la texture fibreuse 210 par le rouleau suiveur 400-1 est alors contrôlée de manière locale selon la largeur axiale du rouleau suiveur 400-1.

La variation de tension exercée sur la texture fibreuse 210 par un rouleau suiveur 400 réalisé selon ce de mode de réalisation est illustrée sur figure 1. Comme il peut être vu sur cette figure, le déplacement d'au moins un segment de rouleau entre une première position, représentée en trait pointillé, et une deuxième position, représentée en trait plein, permet d'adapter la tension exercée par le rouleau suiveur 400 sur la texture fibreuse 210.

Par ailleurs, pour ce mode de réalisation, il est possible de recouvrir chaque tablier 32a, 32b, 32c, 32d des segments de rouleau 3a, 3b, 3c, 3d par une membrane souple 220, de manière à soutenir la texture fibreuse 210 circulant sur le rouleau suiveur. Un tel soutien peut s'avérer particulièrement avantageux, si des écarts résultant de la présence des bras 33a, 33b, 33c, 33d entre les segments de rouleaux 3a, 3b, 3c, 3d, sont relativement grands. La membrane souple est alors déformable, de sorte à pouvoir suivre les déplacements radiaux des segments de rouleau 3a, 3b, 3c, 3d.

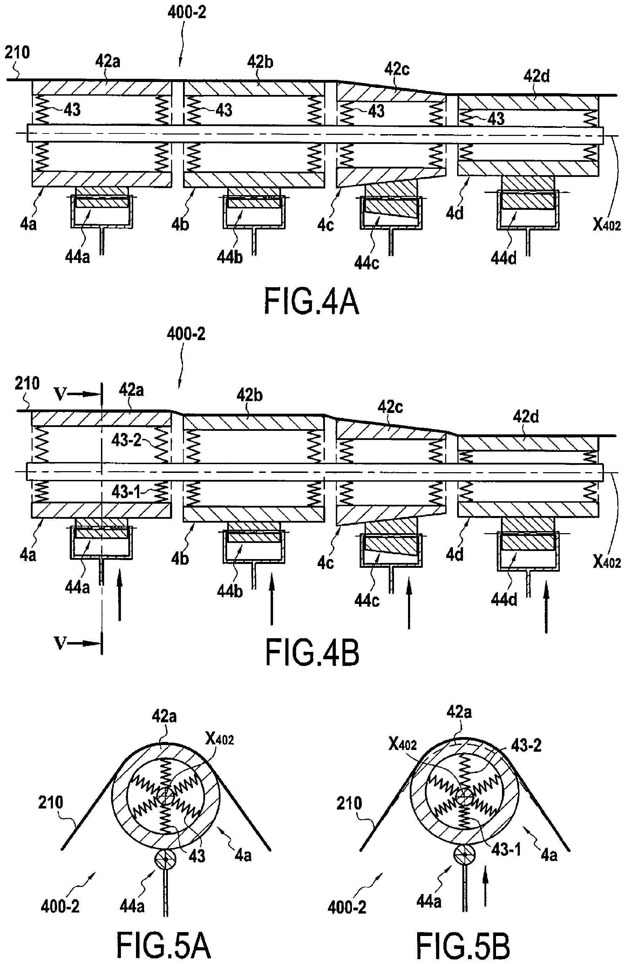

Les figures 4A à 5B illustrent un autre mode de réalisation d'un rouleau suiveur 400-2 qui est, à titre d'exemple, le rouleau suiveur 400 de la figure 1, vu dans le plan de coupe III.

Le rouleau suiveur 400-2 est formé de quatre segments de rouleau 4a, 4b, 4c, 4d, ce nombre étant encore ici choisi à titre illustratif.

Un axe de rotation X₄₀₂ est commun à l'ensemble des segments de rouleau 4a, 4b, 4c, 4d. Chaque tablier 42a, 42b, 42c, 42d de chacun des segments de rouleau 4a, 4b, 4c, 4d est relié à l'axe de rotation X₄₀₂ par des ressorts 43. Contrairement au premier mode de réalisation décrit, chaque tablier 42a, 42b, 42c, 42d est donc mobile par rapport à l'axe de rotation X₄₀₂.

Dans un autre mode de réalisation non-illustré, chacun des segments de rouleau 4a, 4b, 4c, 4d est relié à l'axe de rotation X₄₀₂ par un système de glissière en lieu et place des ressorts 43.

Par ailleurs, chaque segment de rouleau 4a, 4b, 4c, 4d comprend, un système d'actionnement apte à déplacer radialement et de manière indépendante chaque tablier 42a, 42b, 42c, 42d. Le système d'actionnement est ici réalisé par des éléments contrarotatifs 44a, 44b, 44c, 44d, tels des contre-rouleaux dans l'exemple illustré, aptes à appliquer un effort de déplacement radial sur chaque tablier de segment de rouleau. Les éléments contrarotatifs 44a, 44b, 44c, 44d peuvent, à titre d'exemple, être déplacés radialement à partir de bras reliés à leurs axes de rotations d'une part, et à des moyens de déplacement d'autre part, symbolisés par les flèches verticales sur la figure 4b, par exemple des vérins.

La figure 4A illustre une situation initiale similaire à celle de la figure 3A : la texture fibreuse 210 est déroulée du mandrin de stockage, circule sur des rouleaux suiveurs, dont le rouleau suiveur 400-2, puis est enroulée sur le moule 600. Dans cette situation on suppose qu'un premier enroulement n'entraine pas de décadrage de la texture fibreuse 210 sur le moule 600. La tension exercée sur la texture fibreuse 210 par le rouleau suiveur 400-2 est alors supposée comme adaptée. En conséquence, aucun déplacement des segments de rouleau 4a, 4b, 4c, 4d n'est réalisé et les ressorts 43 reliant chaque tablier 42a, 42b, 42c, 42d à l'axe de rotation X₄₀₂ sont dans une première configuration, telle une configuration de repos.

La figure 4B illustre, ensuite, une situation nécessitant une adaptation de la tension exercée par le rouleau suiveur 400-1 sur la texture fibreuse 210, en vue de limiter, à titre d'exemple, tout risque de décadrage de la texture fibreuse 210 lors de son enroulement sur le moule 600. Comme il peut être vu sur cette figure, certains tabliers sont alors déplacés radialement, et de manière indépendante, par rapport à l'axe X₄₀₂. Plus précisément, certains éléments contrarotatifs 44a, 44b, 44c, 44d viennent exercer un effort de déplacement sur une surface d'un segment de rouleau 4a, 4b, 4c, 4d en regard. L'application d'un effort sur un segment de rouleau 4a, 4b, 4c, 4d a pour effet de comprimer certains ressorts 43, tel le ressort 43-1, et déclencher l'extension d'autres ressorts, tel le ressort 43-2, de sorte à déplacer finalement son tablier 42a, 42b, 42c, 42d .

Les figures 5A et 5B sont des vues en coupe transversale dans le plan V de la figure 4B, se rapportant respectivement aux situations décrites pour les figures 4A et 4B. On peut notamment observer sur ces figures respectivement l'état des ressorts 43 selon la première configuration (figure 5A), ainsi que la compression et l'extension des ressorts 43 (figure 5B).

Par ailleurs, les traits pointillés représentés sur la figure 5B représentent la tension initialement exercée sur la texture fibreuse 210 par le rouleau suiveur 400-2 dans la situation initiale de la figure 5A. Comme il peut être vu sur la figure 5B, le déplacement d'au moins un segment de rouleau entre une première position représentée en pointillé et une deuxième position représentée en trait plein permet de contrôler la tension exercée par le rouleau suiveur 400-2 sur la texture fibreuse 210.

Les figures 6A à 7B illustrent ensuite un autre mode de réalisation d'un rouleau suiveur 400-3 qui est, à titre d'exemple, le rouleau suiveur 400 de la figure 1, vu dans le plan de coupe III.

Le rouleau suiveur 400-3 est formé de quatre segments de rouleau 6a, 6b, 6c, 6d, ce nombre étant ici choisi à titre illustratif. Un axe de rotation X₄₀₃ est commun à l'ensemble des segments de rouleau 6a, 6b, 6c, 6d. Chaque tablier 62a, 62b, 62c, 62d de chacun des segments de rouleau 6a, 6b, 6c, 6d est relié à l'axe de rotation X₄₀₃ par une mousse comprimable 63. La mousse comprimable 63 est donc solidaire de chaque tablier 62a, 62b, 62c, 62d et de l'axe de rotation X₄₀₃. Sur ces figures, les différents états de tension au sein de la mousse comprimable 63 sont symbolisés par une échelle de variations de gris. Les tons les plus clairs de cette échelle symbolisent un état dilaté, tandis que les tons les plus foncés symbolisent un état comprimé de la mousse comprimable 63.

Par ailleurs, chaque segment de rouleau comprend, un système d'actionnement apte à déplacer radialement et de manière indépendante chaque tablier 62a, 62b, 62c, 62d. Le système d'actionnement est ici réalisé par des éléments contrarotatifs 64a, 64b, 64c, 64d, tels des contre-rouleaux dans l'exemple illustré, aptes à appliquer un effort de déplacement radial sur chaque tablier de segment de rouleau. Les éléments contrarotatifs 64a, 64b, 64c, 64d peuvent, à titre d'exemple, être déplacés radialement à partir de bras reliés à leurs axes de rotations d'une part et à des moyens de déplacement d'autre part par exemple des vérins, symbolisés par des flèches verticales sur la figure 6B.

La figure 6A illustre une situation initiale pour laquelle la texture fibreuse 210 est déroulée du mandrin de stockage, circule sur des rouleaux suiveurs, dont le rouleau suiveur 400-3, puis est enroulée sur le moule 600. Dans cette situation on suppose qu'un premier enroulement n'entraine pas de décadrage de la texture fibreuse 210 sur le moule 600. La tension exercée sur la texture fibreuse 210 par le rouleau suiveur 400-3 est alors supposée comme adaptée. En conséquence, aucun déplacement des segments de rouleau 6a, 6b, 6c, 6d n'est réalisé et la mousse comprimable 63 reliant chaque tablier 62a, 62b, 62c, 62d à l'axe de rotation X₄₀₃ est dans une première configuration, telle une configuration de repos.

La figure 6B illustre, ensuite, une situation nécessitant une adaptation de la tension exercée par le rouleau suiveur 400-3 sur la texture fibreuse 210, en vue de limiter, à titre d'exemple, tout risque de décadrage de la texture fibreuse 210 lors de son enroulement sur le moule 600. Comme il peut être vu sur cette figure, certains tabliers 62a, 62b, 62c sont alors déplacés radialement, et de manière indépendante, par rapport à l'axe X₄₀₃. Plus précisément, certains éléments contrarotatifs 64a, 64b, 64c, 64d viennent exercer un effort de déplacement sur une surface d'un segment de rouleau 62a, 62b, 62c, 62d en vis-à-vis. L'application d'un effort sur un segment de rouleau 6a, 6b, 6c, 6d a pour effet de comprimer indirectement la mousse en certaines zones (zones gris foncé), et de la dilater en d'autres zones (zones gris clair) de sorte à déplacer finalement le tablier 62a, 62b, 42c, 62d du segment de rouleau 6a, 6b, 6c, 6d correspondant.

Les figures 7A et 7B sont des vues en coupe transversale dans le plan VII de la figure 6B, se rapportant respectivement aux situations décrites pour les figures 6A et 6B. On peut notamment observer sur ces figures l'état de la mousse comprimable 63 selon la première configuration (figure 7A), ainsi que les zones de compression et de dilation de la mousse comprimable 63 (figure 7B).

Par ailleurs, les traits pointillés représentés sur la figure 7B représentent la tension initialement exercée sur la texture fibreuse 210 par le rouleau suiveur 400-3 dans la situation de la figure 7A. Comme il peut être vu sur la figure 7B, le déplacement d'au moins un segment de rouleau entre une première position représentée en pointillé et une deuxième position représentée en trait plein permet de contrôler la tension exercée par le rouleau suiveur 400-3 sur la texture fibreuse 210.

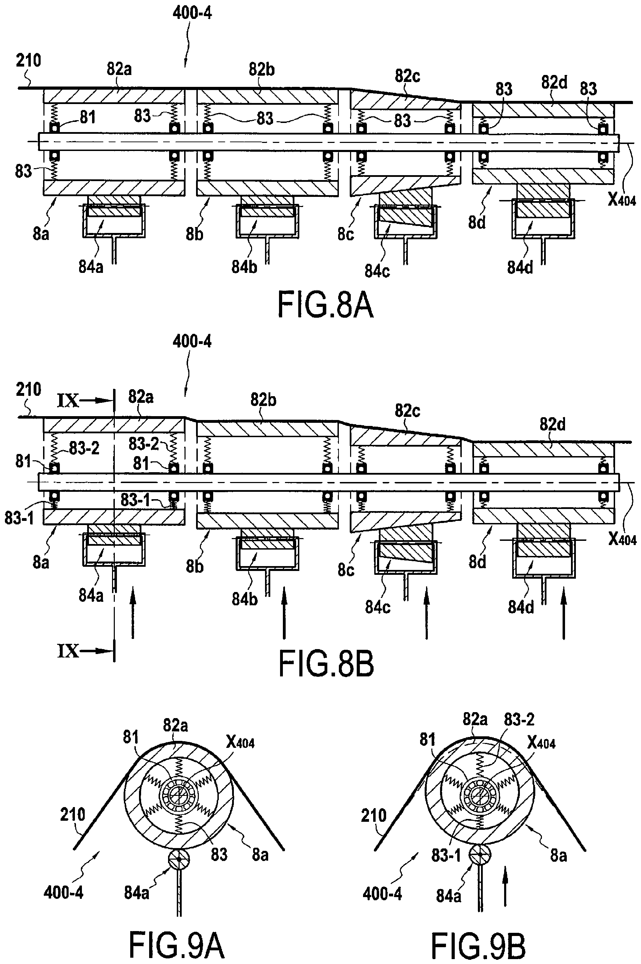

Les figures 8A à 9B illustrent un autre mode de réalisation d'un rouleau suiveur 400-4 qui est, à titre d'exemple, le rouleau suiveur 400 de la figure 1, vu dans le plan de coupe III.

Le rouleau suiveur 400-4 est formé de quatre segments de rouleau 8a, 8b, 8c, 8d, ce nombre étant ici choisi à titre illustratif. Un arbre de support fixe X₄₀₄ est commun à l'ensemble des segments de rouleau 8a, 8b, 8c, 8d. L'arbre fixe de support X₄₀₄ est associé à une pluralité de paliers à roulement 81 en regard de chaque tablier 82a, 82b, 82c, 82d de segment de rouleau 8a, 8b, 8c, 8d. Chaque tablier 82a, 82b, 82c, 82d de chacun des segments de rouleau 8a, 8b, 8c, 8d est relié aux paliers à roulement 81 par des ressorts 83, permettant ainsi d'assurer la liaison et la rotation des tabliers autour de l'arbre fixe de support X₄₀₄.

Par ailleurs, chaque segment de rouleau comprend, un système d'actionnement apte à déplacer radialement et de manière indépendante chaque tablier 82a, 82b, 82c, 82d. Le système d'actionnement est ici réalisé par des éléments contrarotatifs 84a, 84b, 84c, 84d, tels des contre-rouleaux dans l'exemple illustré, aptes à appliquer un effort de déplacement radial sur chaque tablier de segment de rouleau. Les éléments contrarotatifs 84a, 84b, 84c, 84d peuvent, à titre d'exemple, être déplacés radialement à partir de bras reliés à leurs axes de rotations d'une part et à des moyens de déplacement d'autre part, par exemple des vérins, symbolisés par les flèches verticales sur la figure 8B.

La figure 8A illustre une situation initiale pour laquelle la texture fibreuse 210 est déroulée du mandrin de stockage, circule sur des rouleaux suiveurs, dont le rouleau suiveur 400-4, puis est enroulée sur le moule 600. Dans cette situation on suppose qu'un premier enroulement n'entraine pas de décadrage de la texture fibreuse 210 sur le moule 600. La tension exercée sur la texture fibreuse 210 par le rouleau suiveur 400-4 est alors supposée comme adaptée. En conséquence, aucun déplacement des segments de rouleau 8a, 8b, 8c, 8d n'est réalisé et les ressorts 83 reliés aux paliers à roulement 81 sont dans une première configuration, telle une configuration de repos.

La figure 8B illustre, ensuite, une situation nécessitant une adaptation de la tension exercée par le rouleau suiveur 400-4 sur la texture fibreuse 210, en vue de limiter, à titre d'exemple, tout risque de décadrage de la texture fibreuse 210 lors de son enroulement sur le moule 600. Comme il peut être vu sur cette figure, certains tabliers 82a, 82b, 82c sont alors déplacés radialement, et de manière indépendante, par rapport à l'arbre fixe de support X₄₀₄. Plus précisément, certains éléments contrarotatifs 84a, 84b, 84c, 84d viennent exercer un effort de déplacement sur une surface d'un segment de rouleau 82a, 82b, 82c, 82d en vis-à-vis. L'application d'un effort sur un segment de rouleau 8a, 8b, 8c, 8d a pour effet de comprimer certains ressorts 83, tel le ressort 83-1, et déclencher l'extension d'autres ressorts, tel le ressort 83-2, de sorte à déplacer finalement le tablier 82a, 82b, 82c, 82d du segment de rouleau 8a, 8b, 8c, 8d correspondant.

Les figures 9A et 9B sont des vues en coupe transversale dans le plan IX de la figure 8B, se rapportant respectivement aux situations décrites pour les figures 8A et 8B. On peut notamment observer sur ces figures respectivement l'état des ressorts 83 selon la première configuration (figure 9A), ainsi que la compression et l'extension des ressorts 83 (figure 9B).

Par ailleurs, les traits pointillés représentés sur la figure 8B représentent la tension initialement exercée sur la texture fibreuse 210 par le rouleau suiveur 400-4 dans la situation de la figure 8A. Comme il peut être vu sur la figure 8B, le déplacement d'au moins un segment de rouleau entre une première position, représentée en pointillé, et une deuxième position, représentée en trait plein, permet de contrôler la tension exercée par le rouleau suiveur 400-4 sur la texture fibreuse 210.

Dans un autre mode de réalisation non-illustré, une mousse comprimable est disposée entre des tabliers de segments de rouleau formant au moins un rouleau suiveur 400, 500 et un arbre fixe de support. Afin de garantir la rotation des différents tabliers, cette mousse comprimable n'est alors seulement solidaire que de l'arbre fixe de support, ou seulement que des tabliers des segments de rouleau.

Par ailleurs, en référence à l'ensemble des modes de réalisation précédemment décrits, l'homme du métier comprendra qu'il est possible de mettre en œuvre tout élément élastiquement déformable autre que des ressorts ou qu'une mousse comprimable.

En outre, la présence éventuelle d'une membrane souple 220 représentée sur les figures 3A et 3B n'est pas restreinte au mode de réalisation de ces figures. En référence à l'ensemble des modes de réalisation précédemment décrits, il est en effet possible de recouvrir chaque tablier des segments de rouleau par une membrane souple 220, de manière à soutenir la texture fibreuse 210 circulant un des rouleaux suiveur 400-1, 400-2, 400-3, 400-4. Comme exposé précédemment, un tel soutien peut s'avérer particulièrement avantageux, si des écarts entre les segments de rouleaux sont relativement grands. La membrane souple est alors déformable, de sorte à pouvoir suivre les déplacements radiaux des segments de rouleau.

Selon divers modes de réalisation, chaque segment de rouleau d'au moins un rouleau suiveur 400, 500 est associé à un capteur apte à mesurer la tension s'exerçant sur la texture fibreuse 210.

A titre d'exemple, sur les figures 3A et 3B des capteurs de tension 34a, 34b, 34c, 34d sont montés sur les systèmes d'actionnement respectifs de chaque segment de rouleau 3a, 3b, 3c, 3d. Une telle représentation n'est cependant pas limitative, les capteurs 34a, 34b, 34c, 34d pouvant être associés aux segments de rouleau 3a, 3b, 3c, 3d d'une toute autre manière, par exemple associés respectivement aux tabliers 32a, 32b, 32c, 32d.

Chaque capteur 34a, 34b, 34c, 34d est, à titre d'exemple, connecté (traits pointillés sur les figures 3A et 3B) à un système d'asservissement 35, tel un calculateur électronique. Ce système d'asservissement 35 est configuré pour commander, en réponse aux mesures de tension issues de des capteurs, les systèmes d'actionnement du rouleau suiveur 400, 500 réalisé selon un des modes de réalisation précédemment décrit.
Le contrôle de la tension exercée sur la texture fibreuse 210 par le rouleau suiveur 400 ,500 est alors commandé en fonction de la valeur mesurée par chaque capteur 34a, 34b, 34c, 34d équipant chaque segment de rouleau 3a, 3b, 3c, 3d. Chaque segment de rouleau 3a, 3b, 3c, 3d peut par exemple être déplacé indépendamment en fonction de la valeur mesurée par son capteur 34a, 34b, 34c, 34d respectif, ou sinon en fonction d'une valeur moyenne et d'une loi de répartition de la tension à exercer sur la texture fibreuse 210 exprimée en pourcentage par segment.

Ainsi, en réponse à chaque mesure de tension de la texture fibreuse 210, un ou plusieurs tabliers de segments de rouleau d'au moins un rouleau suiveur peuvent être déplacés selon une direction radiale.

En conséquence, en fonction des mesures de tension, il est alors possible d'adapter localement le rayon d'un ou plusieurs rouleaux suiveurs selon leurs largeurs axiales. Il est ainsi possible d'adapter le profil en relief de la surface externe d'au moins un rouleau suiveur, et contrôler la mise sous tension ou le relâchement en tension de la texture fibreuse 210 en contact avec les segments de rouleau du rouleau suiveur.

Une telle adaptation de profil est mise en œuvre lorsque la tension exercée sur la texture fibreuse doit être modifiée, par exemple lorsque la différence entre le profil initial défini par la surface externe du moule et le profil réel sur lequel la texture est enroulée est telle qu'elle peut entraîner des pertes de tension à certaines positions axiales dans la texture.

Ainsi, par la mise en œuvre de segments de rouleau permettant de modifier localement le profil en relief de la surface externe d'un ou plusieurs rouleaux suiveurs lors de la mise en forme d'une préforme fibreuse, l'installation et le procédé de l'invention permettent de mettre en forme des préformes fibreuses de révolution présentant en section radiale un profil évolutif dans lesquelles les pertes ou inhomogénéités de tension sont significativement réduites. Suite à son enroulement sur le moule d'injection ou à la fermeture de ce moule, la préforme fibreuse formée présente peu de défauts (vagues sur les premiers tours enroulés, tension mal appliquée engendrant des flambements et/ou pincements de fibres lors de la fermeture du moule, zones de surépaisseurs non désirées, taux volumiques de fibres hors spécification, plis, désalignements, etc.) par rapport à une préforme formée selon l'art antérieur ou les déséquilibres de tension sont plus importants. On réduit ainsi les arrêts inopinés de la machine d'enroulement habituellement nécessaires pour reprendre les défauts tels que des plis ou effondrement de portions (par exemple des brides) de la préforme qui requièrent en outre un retour en arrière de la machine ainsi qu'une intervention d'un ou plusieurs techniciens.

## Revendications

1. Installation (10) pour la mise en forme d'une préforme fibreuse de révolution présentant en section radiale un profil évolutif, comprenant un mandrin de stockage (300) destiné à stocker une texture fibreuse (210) en forme de bande enroulée, un ou plusieurs rouleaux suiveurs (400, 500) et un moule (600) de révolution sur lequel la texture fibreuse (210) est destinée à être mise en forme par enroulement, le ou les rouleaux suiveurs étant placés entre le mandrin de stockage (300) et le moule (600) de révolution, le mandrin de stockage (300), chaque rouleau suiveur (400, 500) et le moule (600) présentant sur leur largeur axiale un rayon variable de manière à définir une surface externe ayant un profil en relief,
**caractérisée en ce qu'**au moins un rouleau suiveur (400, 400-1, 400-2, 400-3, 400-4) comprend une pluralité de segments de rouleau s'étendant chacun sur une partie de la largeur axiale du rouleau suiveur, chaque segment de rouleau comprenant :
- un tablier définissant une partie de la surface externe du rouleau suiveur ; et
- un système d'actionnement apte à déplacer dans une direction radiale par rapport à l'axe du rouleau suiveur le tablier dudit segment de rouleau de manière à modifier localement le profil de la surface externe du rouleau suiveur (400, 400-1, 400-2, 400-3, 400-4).

2. Installation selon la revendication 1 dans laquelle une membrane souple (220) recouvre chaque tablier de segment de rouleau dudit au moins un rouleau suiveur (400-1, 400-2, 400-3, 400-4).

3. Installation selon la revendication 1 ou 2, dans lequel chaque segment de rouleau d'au moins un rouleau suiveur (400, 400-1, 400-2, 400-3, 400-4, 500) est associé à un capteur (34a, 34b, 34c, 34d) apte à mesurer la tension de la texture fibreuse (210), chaque capteur (34a, 34b, 34c, 34d) étant connecté à un système d'asservissement (35) configuré pour commander, en réponse aux mesures de tension des capteurs (34a, 34b, 34c, 34d), le système d'actionnement de tout ou partie des segments de rouleau.

4. Installation selon l'une quelconque des revendications 1 à 3, dans laquelle chaque segment de rouleau (3a, 3b, 3c, 3d) comprend un axe de rotation (31a, 31b, 31c, 31d) distinct, le tablier (32a, 32b, 32c, 32d) du segment de rouleau (3a, 3b, 3c, 3d) étant solidaire de l'axe de rotation (31a, 31b, 31c, 31d), le système d'actionnement étant configuré pour déplacer radialement l'axe de rotation (31a, 31b, 31c, 31d) dudit segment de rouleau (3a, 3b, 3c, 3d).

5. Installation selon l'une quelconque des revendications 1 à 3, dans laquelle ledit au moins un rouleau suiveur (400-2, 400-3) comprend un axe de rotation (X₄₀₂, X₄₀₃) commun aux segments de rouleau (4a, 4b, 4c, 4d, 6a, 6b, 6c, 6d), chaque tablier (42a, 42b, 42c, 42d, 62a, 62b, 62c, 62d) de segment de rouleau (4a, 4b, 4c, 4d) étant relié à l'axe de rotation (X₄₀₂, X₄₀₃) par au moins un élément élastiquement déformable, le système d'actionnement comprenant une pluralité d'éléments contrarotatifs (44a, 44b, 44c, 44d, 64a, 64b, 64c, 64d) aptes à appliquer un effort de déplacement radial sur chaque tablier (42a, 42b, 42c, 42d, 62a, 62b, 62c, 62d) de segment de rouleau (4a, 4b, 4c, 4d, 6a, 6b, 6c, 6d).

6. Installation selon la revendication 5, dans laquelle ledit au moins un élément élastiquement déformable comprend des ressorts (43) ou une mousse comprimable (63).

7. Installation selon l'une quelconque des revendications 1 à 3, dans laquelle ledit au moins un rouleau suiveur (400-4) comprend un arbre de support fixe (X₄₀₄) avec une pluralité de paliers à roulement (81) en regard de chaque tablier (82a, 82b, 82c, 82d) de segment de rouleau (8a, 8b, 8c, 8d), chaque tablier (82a, 82b, 82c, 82d) étant relié aux paliers à roulement (81) par des ressorts (83), le système d'actionnement comprenant une pluralité éléments contrarotatifs (84a, 84b, 84c, 84d) aptes à appliquer un effort de déplacement radial sur chaque tablier (82a, 82b, 82c, 82d) de segment de rouleau (8a, 8b, 8c, 8d).

8. Procédé de mise en forme d'une préforme fibreuse de révolution présentant en section radiale un profil évolutif à partir d'une texture fibreuse (210) obtenue par tissage tridimensionnel ou multicouche, la texture fibreuse (210) étant mise en forme par enroulement sous tension sur un moule (600) de révolution afin d'obtenir la préforme fibreuse, la texture fibreuse (210) étant déroulée à partir d'un mandrin de stockage (300), la texture fibreuse (210) circulant sur un ou plusieurs rouleaux suiveurs (400, 500) placés entre le mandrin de stockage (300) et le moule (600) de révolution, le mandrin de stockage (300), chaque rouleau suiveur (400, 500) et le moule (600) présentant sur leur largeur axiale un rayon variable de manière à définir une surface externe ayant un profil en relief,
**caractérisé en ce qu'**au moins un rouleau suiveur (400, 400-1, 400-2, 400-3, 400-4) comprend une pluralité de segments de rouleau s'étendant chacun sur une partie de la largeur axiale du rouleau suiveur (400, 400-1, 400-2, 400-3, 400-4), chaque segment de rouleau comprenant un tablier définissant une partie de la surface externe dudit au moins un rouleau suiveur, chaque tablier étant mobile dans une direction radiale par rapport à l'axe dudit au moins un rouleau suiveur (400, 400-1, 400-2, 400-3, 400-4), et **en ce que** le procédé comprend au cours de l'enroulement de la texture fibreuse (210) sur le moule (600) de révolution, une étape de déplacement d'au moins un tablier d'un segment de rouleau parmi une pluralité de segments de rouleau dans une direction radiale par rapport à l'axe dudit au moins un rouleau suiveur (400, 400-1, 400-2, 400-3, 400-4).

9. Procédé selon la revendication 8, comprenant
- une étape de mesure d'une tension s'exerçant sur une texture fibreuse déroulée à partir du mandrin de stockage (300) et circulant sur un rouleau suiveur (400, 400-1, 400-2, 400-3, 400-4, 500) ; et
- en réponse à la mesure de tension, une étape de commande de déplacement radial du tablier d'au moins un segment de rouleau.

## Patentansprüche

1. Anlage (10) zum Informbringen eines Rotationsfaservorformlings, der im radialen Querschnitt ein veränderliches Profil aufweist, umfassend einen Lagerdorn (300), der zur Lagerung einer aufgewickelten bahnförmigen Faserstruktur (210) bestimmt ist, eine oder mehrere Folgerolle(n) (400, 500) und eine Rotationsform (600), auf der die Faserstruktur (210) durch Aufwickeln in Form gebracht werden soll, wobei die Folgerolle oder -rollen zwischen dem Lagerdorn (300) und der Rotationsform (600) angeordnet sind, wobei der Lagerdorn (300), jede Folgerolle (400, 500) und die Form (600) über ihre axiale Breite einen variablen Radius aufweisen, um eine Außenfläche mit einem erhabenen Profil zu definieren,
**dadurch gekennzeichnet, dass** wenigstens eine Folgerolle (400, 400-1, 400-2, 400-3, 400-4) eine Vielzahl von Rollensegmenten umfasst, die sich jeweils über einen Teil der axialen Breite der Folgerolle erstrecken, wobei jedes Rollensegment umfasst:
- eine Schürze, die einen Teil der Außenfläche der Folgerolle definiert, und
- ein Betätigungssystem, das geeignet ist, die Schürze des Rollensegments in einer radialen Richtung gegenüber der Achse der Folgerolle zu bewegen, um das Profil der Außenfläche der Folgerolle (400, 400-1, 400-2, 400-3, 400-4) lokal zu verändern.

2. Anlage nach Anspruch 1, bei der eine flexible Membran (220) jede Schürze eines Rollensegments der wenigstens einen Folgerolle (400-1, 400-2, 400-3, 400-4) bedeckt.

3. Anlage nach Anspruch 1 oder 2, bei der jedes Rollensegment von wenigstens einer Folgerolle (400, 400-1, 400-2, 400-3, 400-4, 500) einem Sensor (34a, 34b, 34c, 34d) zugeordnet ist, welcher geeignet ist, die Spannung der Faserstruktur (210) zu messen, wobei jeder Sensor (34a, 34b, 34c, 34d) mit einem Nachführsystem (35) verbunden ist, das dazu ausgelegt ist, das Betätigungssystem von allen Rollensegmenten oder eines Teils davon als Reaktion auf die Spannungsmessungen der Sensoren (34a, 34b, 34c, 34d) zu steuern.

4. Anlage nach einem der Ansprüche 1 bis 3, bei der jedes Rollensegment (3a, 3b, 3c, 3d) eine separate Rotationsachse (31a, 31b, 31c, 31d) umfasst, wobei die Schürze (32a, 32b, 32c, 32d) des Rollensegments (3a, 3b, 3c, 3d) mit der Rotationsachse (31a, 31b, 31c, 31d) fest verbunden ist, wobei das Betätigungssystem dazu ausgelegt ist, die Rotationsachse (31a, 31b, 31c, 31d) des Rollensegments (3a, 3b, 3c, 3d) radial zu bewegen.

5. Anlage nach einem der Ansprüche 1 bis 3, bei der die wenigstens eine Folgerolle (400-2, 400-3) eine Rotationsachse (X₄₀₂, X₄₀₃) aufweist, die den Rollensegmenten (4a, 4b, 4c, 4d, 6a, 6b, 6c, 6d) gemein ist, wobei jede Schürze (42a, 42b, 42c, 42d, 62a, 62b, 62c, 62d) eines Rollensegments (4a, 4b, 4c, 4d) mit der Rotationsachse (X₄₀₂, X₄₀₃) durch wenigstens ein elastisch verformbares Element verbunden ist, wobei das Betätigungssystem eine Vielzahl von gegenläufigen Elementen (44a, 44b, 44c, 44d, 64a, 64b, 64c, 64d) umfasst, die geeignet sind, an jede Schürze (42a, 42b, 42c, 42d, 62a, 62b, 62c, 62d) eines Rollensegments (4a, 4b, 4c, 4d, 6a, 6b, 6c, 6d) eine radiale Bewegungskraft anzulegen.

6. Anlage nach Anspruch 5, bei der das wenigstens eine elastisch verformbare Element Federn (43) oder einen komprimierbaren Schaum (63) umfasst.

7. Anlage nach einem der Ansprüche 1 bis 3, bei der die wenigstens eine Folgerolle (400-4) eine feste Tragwelle (X₄₀₄) mit einer Vielzahl von Wälzlagern (81) gegenüber jeder Schürze (82a, 82b, 82c, 82d) eines Rollensegments (8a, 8b, 8c, 8d) umfasst, wobei jede Schürze (82a, 82b, 82c, 82d) durch Federn (83) mit den Wälzlagern (81) verbunden ist, wobei das Betätigungssystem eine Vielzahl von gegenläufigen Elementen (84a, 84b, 84c, 84d) umfasst, die geeignet sind, an jede Schürze (82a, 82b, 82c, 82d) eines Rollensegments (8a, 8b, 8c, 8d) eine radiale Bewegungskraft anzulegen.

8. Verfahren zum Informbringen eines Rotationsfaservorformlings, der im radialen Querschnitt ein veränderliches Profil aufweist, aus einer Faserstruktur (210), die durch dreidimensionales oder mehrlagiges Weben erhalten wird, wobei die Faserstruktur (210) durch Aufwickeln unter Spannung auf eine Rotationsform (600) in Form gebracht wird, um den Faservorformling zu erhalten, wobei die Faserstruktur (210) von einem Lagerdorn (300) abgewickelt wird, wobei die Faserstruktur (210) über eine oder mehrere Folgerolle(n) (400, 500) läuft, welche zwischen dem Lagerdorn (300) und der Rotationsform (600) angeordnet sind, wobei der Lagerdorn (300), jede Folgerolle (400, 500) und die Form (600) über ihre axiale Breite einen variablen Radius aufweisen, um eine Außenfläche mit einem erhabenen Profil zu definieren,
**dadurch gekennzeichnet, dass** wenigstens eine Folgerolle (400, 400-1, 400-2, 400-3, 400-4) eine Vielzahl von Rollensegmenten umfasst, die sich jeweils über einen Teil der axialen Breite der Folgerolle (400, 400-1, 400-2, 400-3, 400-4) erstrecken, wobei jedes Rollensegment eine Schürze umfasst, die einen Teil der Außenfläche der wenigstens einen Folgerolle definiert, wobei jede Schürze in einer radialen Richtung gegenüber der Achse der wenigstens einen Folgerolle (400, 400-1, 400-2, 400-3, 400-4) beweglich ist, und dass das Verfahren während des Aufwickelns der Faserstruktur (210) auf die Rotationsform (600) einen Schritt des Bewegens wenigstens einer Schürze eines Rollensegments aus einer Vielzahl von Rollensegmenten in einer radialen Richtung gegenüber der Achse der wenigstens einen Folgerolle (400, 400-1, 400-2, 400-3, 400-4) umfasst.

9. Verfahren nach Anspruch 8, umfassend
- einen Schritt zum Messen einer Spannung, die auf eine von dem Lagerdorn (300) abgewickelte und über eine Folgerolle (400, 400-1, 400-2, 400-3, 400-4, 500) laufende Faserstruktur ausgeübt wird, und
als Reaktion auf die Spannungsmessung einen Schritt zum Steuern der radialen Bewegung der Schürze von wenigstens einem Rollensegment.

## Claims

1. An installation (10) for shaping an axisymmetric fiber preform presenting a profile that varies in radial section, the installation comprising a storage mandrel (300) for storing a fiber texture (210) in the form of a wound strip, one or more follower rollers (400, 500), and an axisymmetric mold (600) onto which the fiber texture (210) is to be shaped by being wound, the follower rollers being placed between the storage mandrel (300) and the axisymmetric mold (600), the storage mandrel (300), each follower roller (400, 500), and the mold (600) presenting across their axial widths radii that vary so as to define outside surfaces having respective profiles in relief, the installation being **characterized in that** at least one follower roller (400, 400-1, 400-2, 400-3, 400-4) comprises a plurality of roller segments, each extending over a fraction of the axial width of the follower roller, each roller segment comprising:
- a platen defining a portion of the outside surface of the follower roller; and
- an actuator system suitable for moving the platen of said roller segments, in a direction that is radial relative to the axis of the follower roller in order to modify locally the profile of the outside surface of the follower roller (400, 400-1, 400-2, 400-3, 400-4).

2. An installation according to claim 1, wherein a flexible membrane (220) covers each roller segment platen of said at least one follower roller (400-1, 400-2, 400-3, 400-4).

3. An installation according to claim 1 or claim 2, wherein each roller segment of at least one follower roller (400, 400-1, 400-2, 400-3, 400-4, 500) is associated with a sensor (34a, 34b, 34c, 34d) suitable for measuring the tension of the fiber texture (210), each sensor (34a, 34b, 34c, 34d) being connected to a servo-control system (35) configured to respond to the tension measurements of the sensors (34a, 34b, 34c, 34d) in order to control the actuator system(s) of some or all of the roller segments.

4. An installation according to any one of claims 1 to 3, wherein each roller segment (3a, 3b, 3c, 3d) has a distinct rotary shaft (31a, 31b, 31c, 31d), the platen (32a, 32b, 32c, 32d) of the roller segments (3a, 3b, 3c, 3d) being secured to the rotary shaft (31a, 31b, 31c, 31d), the actuator system being configured to move the rotary shaft (31a, 31b, 31c, 31d) of said roller segment (3a, 3b, 3c, 3d) radially.

5. An installation according to any one of claims 1 to 3, wherein said at least one follower roller (400-2, 400-3) has a rotary shaft (X₄₀₂, X₄₀₃) common to the roller segments (4a, 4b, 4c, 4d, 6a, 6b, 6c, 6d), each platen (42a, 42b, 42c, 42d, 62a, 62b, 62c, 62d) of a roller segment (4a, 4b, 4c, 4d) being connected to the rotary shaft (X₄₀₂, X₄₀₃) by at least one elastically deformable element, the actuator system having a plurality of contrarotating elements (44a, 44b, 44c, 44d, 64a, 64b, 64c, 64d) suitable for applying a radial movement force against each platen (42a, 42b, 42c, 42d, 62a, 62b, 62c, 62d) of a roller segment (4a, 4b, 4c, 4d, 6a, 6b, 6c, 6d) .

6. An installation according to claim 5, wherein said at least one elastically deformable element comprises springs (43) or a compressible foam (63).

7. An installation according to any one of claims 1 to 3, wherein said at least one follower roller (400-4) comprises a stationary support shaft (X₄₀₄) with a plurality of rolling bearings (81) facing each platen (82a, 82b, 82c, 82d) of a roller segment (8a, 8b, 8c, 8d) each platen (82a, 82b, 82c, 82d) being connected to the rolling bearings (81) by springs (83), the actuator system comprising a plurality of contrarotating elements (84a, 84b, 84c, 84d) suitable for applying a radial movement force against each platen (82a, 82b, 82c, 82d) of a roller segment (8a, 8b, 8c, 8d).

8. A method of shaping from a fiber texture (210) obtained by three-dimensional or multilayer weaving to form an axisymmetric fiber preform presenting a profile that varies in radial section, the fiber texture (210) being shaped by being wound under tension onto an axisymmetric mold (600) in order to obtain the fiber preform, the fiber texture (210) being unwound from a storage mandrel (300), the fiber texture (210) traveling over one or more follower rollers (400, 500) placed between the storage mandrel (300) and the axisymmetric mold (600), the storage mandrel (300), each follower roller (400, 500), and the mold (600) presenting across their axial widths radii that vary in such a manner as to define an outside surface having a profile in relief, the method being **characterized in that** at least one follower roller (400, 400-1, 400-2, 400-3, 400-4) comprises a plurality of roller segments each extending over a fraction of the axial width of the follower roller (400, 400-1, 400-2, 400-3, 400-4), each roller segment comprising a platen defining a portion of the outside surface of said at least one follower roller, each platen being movable in a radial direction relative to the axis of said at least one follower roller (400, 400-1, 400-2, 400-3, 400-4), and **in that**, while winding the fiber texture (210) onto the axisymmetric mold (600), the method comprises a step of moving at least one platen of a roller segment from among the plurality of roller segments in a radial direction relative to the axis of said at least one follower roller (400, 400-1, 400-2, 400-3, 400-4).

9. A method according to claim 8, comprising:
- a step of measuring a tension acting on a fiber texture being unwound from the storage mandrel (300) and traveling over a follower roller (400, 400-1, 400-2, 400-3, 400-4, 500); and
- in response to the tension measurement, a step of causing the platen of at least one roller segment to move radially.
